# EUROPÄISCHE PATENTSCHRIFT

(11) **EP 2 888 503 B1**
(45) Veröffentlichungstag und Bekanntmachung des Hinweises auf die Patenterteilung: **26.10.2016**
(21) Anmeldenummer: 13736836.1
(22) Anmeldetag: 03.07.2013
(51) Int. Cl.: B60G 15/12, F16F 9/04, B60G 15/14, B60G 17/04, B60G 17/052

(54) **LUFTFEDERMODUL**
AIR SPRING MODULE
MODULE DE SUSPENSION PNEUMATIQUE

(30) Priorität: 21.08.2012 DE 102012016397; 27.09.2012 DE 102012217538
(43) Veröffentlichungstag der Anmeldung: 01.07.2015
(73) Patentinhaber: Continental Teves AG&Co. Ohg, 60488 Frankfurt (DE)
(72) Erfinder: JOB, Heinz, 31535 Neustadt (DE)
(86) Internationale Anmeldenummer: PCT/EP2013/064025
(87) Internationale Veröffentlichungsnummer: WO 2014/029543

(56) Entgegenhaltungen:
- WO-A1-2012/100003
- DE-A1- 10 200 632
- DE-A1- 19 911 620
- US-A- 4 762 308
- US-A- 5 255 935
- US-A1- 2008 246 198

## Beschreibung

Die Erfindung betrifft ein Luftfedermodul bestehend aus einer Luftfeder und einem Stoßdämpfer zur Federung und Dämpfung von Schwingungen eines Kraftfahrzeugfahrwerkes, mit wenigstens zwei mit Druckluft gefüllten Arbeitsräumen, welche über wenigstens ein Ventil verbindbar sind, einem Luftfederdeckel, einem daran befestigten luftdichten Rollbalg, welcher einen mit Druckluft gefüllten ersten Arbeitsraum mindestens teilweise begrenzt, einem Abrollkolben, welcher an einem Zylinderrohr des Stoßdämpfers befestigt ist und auf dem der Rollbalg abrollt.

Bei grundsätzlich bekannten Luftfedermodulen mit mehreren, jeweils ein Volumen (Volumen V₁ bis Vᵢ) aufweisenden Arbeitsräumen müssen vom Gesamtluftfedervolumen einzelne Volumen (Vgesamt =∑Vi) durch eine Trennwand und geeignete Schaltventile abgeteilt werden.

So ist beispielsweise aus der DE 102 00 632 A1 eine Luftfeder mit zwei Arbeitsräumen zu entnehmen, wobei der zweite Arbeitsraum mit einem Zusatzvolumen im Luftfederdeckel ausgebildet ist, so dass durch Abschaltung oder Zuschaltung des Zusatzvolumens zwischen sportlichem oder komfortablem Modus des Luftfedermoduls umgeschaltet werden kann.

Eine weitere, gattungsgemäße Luftfeder ist aus der US 5,255,935 bekannt.

Neuere Luftfederentwicklungen haben dagegen drei Volumen, womit noch ein oder zwei Zwischenmodi zwischen Sport und Komfort geschaltet werden können.

Bei diesen drei Volumen können die Zusatzvolumen 1 und 2 abgetrennt werden, so dass nur V0 (= Luftfeder) alleine federt. Öffnet man Ventil 1, dann ist das Zusatzvolumen 1 zugeschaltet und es stehen die Volumen V0 + ZV1 zur Verfügung. Wird dagegen Ventil 2 geöffnet, stehen die Volumen V0 + ZV2 zur Verfügung. Sind beide Ventile geöffnet, stehen die Volumen V0 + ZV1 + ZV2 zur Verfügung. Es sind also die Gesamtvolumen V0, V0 + ZV1, V0 + ZV2 und V0 + ZV1 + ZV2 schaltbar. Durch entsprechende Wahl der Größe der Zusatzvolumen können so sehr fein gestaffelte Volumen und somit auch Federraten verwirklicht werden.

Dabei ergibt das kleine Volumen V0 allein eine sportliche und harte, das großes Volumen V0 + ZV1 + ZV2 eine komfortable und weiche Federrate.

Das Prinzip mit Luftfedervolumen plus zwei Zusatzvolumen ist bereits bekannt. Allerdings sind dort die beiden Zusatzvolumen und Ventile im Deckel integriert. Insbesondere hinsichtlich des in der Regel geringen, zur Verfügung stehenden Bauraumes weist diese Ausgestaltung Nachteile auf. Ferner führt diese zu hohem Kosten-, Herstellungs- und Montageaufwand.

Der Erfindung liegt daher die Aufgabe zugrunde, ein dahingehend verbessertes Luftfedermodul mit wenigstens zwei Arbeitsräumen bereitzustellen, welches kostengünstig und einfach herzustellen und zu montieren ist, wobei gleichzeitig en möglichst geringer Bauraum beansprucht werden soll.

Die Aufgabe wird durch das Luftfedermodul mit den Merkmalen des Anspruchs 1 gelöst. Weitere vorteilhafte Ausbildungen sind in den Unteransprüchen offenbart.

Das erfindungsgemäße Luftfedermodul ist dadurch gekennzeichnet, dass im Abrollkolben ein zweiter sowie ein dritter Arbeitsraum übereinander, das Zylinderrohr umgebend angeordnet sind, welche durch einen im Abrollkolben vorgesehenen Zwischenboden getrennt voneinander vorgesehen und über schaltbare, im Abrollkolben angeordnete Ventile mit dem ersten Arbeitsraum verbindbar sind.

Die zusätzlichen Volumen des zweiten und des dritten Arbeitsraumes erhöhen den axialen Bauraumbedarf des Luftfedermoduls im Vergleich zur Anordnung im Luftfederdeckel nicht bzw. nicht wesentlich. Ferner ist die Herstellung dadurch vereinfacht, dass die Ventile direkt am Abrollkolben angeordnet werden können.

Vorzugsweise weist der Abrollkolben wenigstens ein Außenrohr mit einer Klemmkontur auf, an dem der Rollbalg mittels eines Klemmelementes befestigt ist und auf welchem der Rollbalg abrollt, und es ist ein Innenrohr vorgesehen, mit welchem der Abrollkolben auf dem Zylinderrohr positioniert ist, wobei das Innen- und das Außenrohr im Bereich der Klemmkontur luftdicht verbunden sind. Dieser Aufbau ermöglicht insbesondere eine einfache Herstellung des Abrollkolbens.

Gemäß einer vorteilhaften Ausführungsform der Erfindung ist der Abrollkolben mehrteilig ausgebildet und weist wenigstens ein Kolbenteil sowie einen Boden auf. Durch den Boden können beispielsweise Einzelteil-Toleranzen über die Gesamtlänge eliminiert werden.

Wird der Zwischenboden gemäß einer vorteilhaften Ausführungsform als separates Bauteil vorgesehen, welches luftdicht in dem Kolbenteil befestigt ist, können die beiden Bauteile Innen- und Außenrohr von der Klemmkontur bis zum Boden einteilig ausgebildet werden, wodurch die Herstellung sowie die Montage vereinfacht werden kann.

Eine weitere vorteilhafte Ausführungsform der Erfindung sieht vor, dass das Kolbenteil des Abrollkolbens mehrteilig ausgebildet ist und wenigstens ein Kolbenober- und ein Kolbenunterteil aufweist, wobei der Zwischenboden in dem kolbenoberteil oder in dem Kolbenunterteil vorgesehen ist, welches mit dem Boden luftdicht verschließbar ist. Es ist hierdurch beispielsweise möglich, die beiden Kolbenteile aus unterschiedlichen Werkstoffen herzustellen. Gleichzeitig entfällt eine separate Abdichtung des Zwischenbodens.

Vorzugsweise weist der Abrollkolben eine Kippsicherung auf, welche eine gesicherte Befestigung auf dem Zylinderrohr und gleichzeitig ein Luftaustausch des zweiten und dritten Arbeitsraumes mit dem ersten Arbeitsraum ermöglicht, so dass der Luftaustausch ohne weitere konstruktive Ausgestaltungen in einfacher Weise vorgesehen werden kann.

Gemäß einer vorteilhaften Weiterbildung der Erfindung ist die Kippsicherung aus Kunststoff vorgesehen und in einer Sicke des Innenrohres spielfrei fixiert, wodurch sie einfach und kostengünstig hergestellt und montiert werden kann.

Die Ventile können in einfacher Weise montiert werden, wenn gemäß einer vorteilhaften Ausführungsform der Erfindung an das Außenrohr Ventilaufnahmen für die Ventile angeformt oder befestigt vorgesehen sind. Es entsteht eine komplette funktionale und fertigungstechnische Einheit.

Der Abrollkolben kann vorteilhafterweise aus Stahl und/oder aus Aluminium vorgesehen sein, wodurch die Bauteile einfach und kostengünstig herstellbar sind.

Eine Gewichtseinsparung kann dadurch erreicht werden, dass der Abrollkolben gemäß einer vorteilhaften Ausführungsform aus Kunststoff vorgesehen ist.

Bei der Kunststoffausführung des Abrollkolbens ist es möglich, dass das Kolbenober- und Kolbenuntereil miteinander verschweißt oder mittels einer Schnappverbindung luftdicht miteinander verbunden sind.

Vorzugsweise ist die Kippsicherung einteilig an das Innenrohr angeformt vorgesehen, so dass eine Montage entfallen dieses Bauteils kann.

Weitere Merkmale, Vorteile und Anwendungsmöglichkeiten der Erfindung gehen aus den Unteransprüchen und der nachfolgenden Beschreibung von Ausführungsbeispielen sowie anhand der Zeichnung hervor. Es zeigt jeweils stark schematisiert sowie teilweise im Schnitt:
- Figur 1a: ein erstes Ausführungsbeispiel eines erfindungsgemäßen Luftfedermoduls im Längsschnitt;
- Figur 1b: das erste Ausführungsbeispiel gemäß Fig. 1a im Längsschnitt um 90°gedreht;
- Figur 2a: ein zweites Ausführungsbeispiel eines erfindungsgemäßen Luftfedermoduls im Längsschnitt;
- Figur 2b: das zweite Ausführungsbeispiel gemäß Fig. 2a im Längsschnitt um 90°gedreht;
- Figur 3a: ein drittes Ausführungsbeispiel eines erfindungsgemäßen Luftfedermoduls im Längsschnitt;
- Figur 3b: das dritte Ausführungsbeispiel gemäß Fig. 3a im Längsschnitt um 90°gedreht;
- Figur 4a: ein viertes Ausführungsbeispiel eines erfindungsgemäßen Luftfedermoduls im Längsschnitt;
- Figur 4b: das vierte Ausführungsbeispiel gemäß Fig. 4a im Längsschnitt um 90°gedreht;
- Figur 4c: einen Ausschnitt des vierten Ausführungsbeispiel gemäß Fig. 4a und 4b mit einer Boden- und Ventilsitzvariation;
- Figur 4d: einen Ausschnitt des vierten Ausführungsbeispiel gemäß Fig. 4a und 4b mit einer Boden- und Ventilsitzvariation;
- Figur 4e: einen Ausschnitt des vierten Ausführungsbeispiel gemäß Fig. 4a und 4b mit einer Boden- und Ventilsitzvariation;
- Figur 5a: ein fünftes Ausführungsbeispiel eines erfindungsgemäßen Luftfedermoduls im Längsschnitt;
- Figur 5b: das fünfte Ausführungsbeispiel gemäß Fig. 5a im Längsschnitt um 90°gedreht;
- Figur 5c: einen Ausschnitt des fünften Ausführungsbeispiel gemäß Fig. 5a und 5b mit einer Ventilvariation;
- Figur 5d: einen Ausschnitt des fünften Ausführungsbeispiel gemäß Fig. 5a und 5b mit einer Ventilvariation;
- Figur 6a: ein sechstes Ausführungsbeispiel eines erfindungsgemäßen Luftfedermoduls im Längsschnitt;
- Figur 6b: das sechste Ausführungsbeispiel gemäß Fig. 6a im Längsschnitt um 90°gedreht;
- Figur 6c: einen Ausschnitt des sechsten Ausführungsbeispiel gemäß Fig. 6a und 6b mit einer Ventilvariation;
- Figur 6d: einen Ausschnitt des sechsten Ausführungsbeispiel gemäß Fig. 6a und 6b mit einer Ventilvariation;
- Figur 6e: einen Ausschnitt des sechsten Ausführungsbeispiel gemäß Fig. 6a und 6b mit einer Ventilvariation;
- Figur 7a: ein siebtes Ausführungsbeispiel eines erfindungsgemäßen Luftfedermoduls im Längsschnitt;
- Figur 7b: das siebte Ausführungsbeispiel gemäß Fig. 7a im Längsschnitt um 90°gedreht;
- Figur 7c: einen Ausschnitt des siebten Ausführungsbeispiel gemäß Fig. 7a und 7b mit einer Ventilvariation;
- Figur 7d: einen Ausschnitt des siebten Ausführungsbeispiel gemäß Fig. 7a und 7b mit einer Ventilvariation;
- Figur 8a: einen Ausschnitt eines achten Ausführungsbeispiels eines erfindungsgemäßen Luftfedermoduls;
- Figur 8b: einen vergrößerten Ausschnitt des achten Ausführungsbeispiels gemäß Fig.8a;
- Figur 9a: einen Ausschnitt eines neunten Ausführungsbeispiels eines erfindungsgemäßen Luftfedermoduls;
- Figur 9b: einen vergrößerten Ausschnitt des neunten Ausführungsbeispiels gemäß Fig.9a;
- Figur 10a: einen Ausschnitt eines zehnten Ausführungsbeispiels eines erfindungsgemäßen Luftfedermoduls und
- Figur 10b: einen vergrößerten Ausschnitt des zehnten Ausführungsbeispiels gemäß Fig.10a.

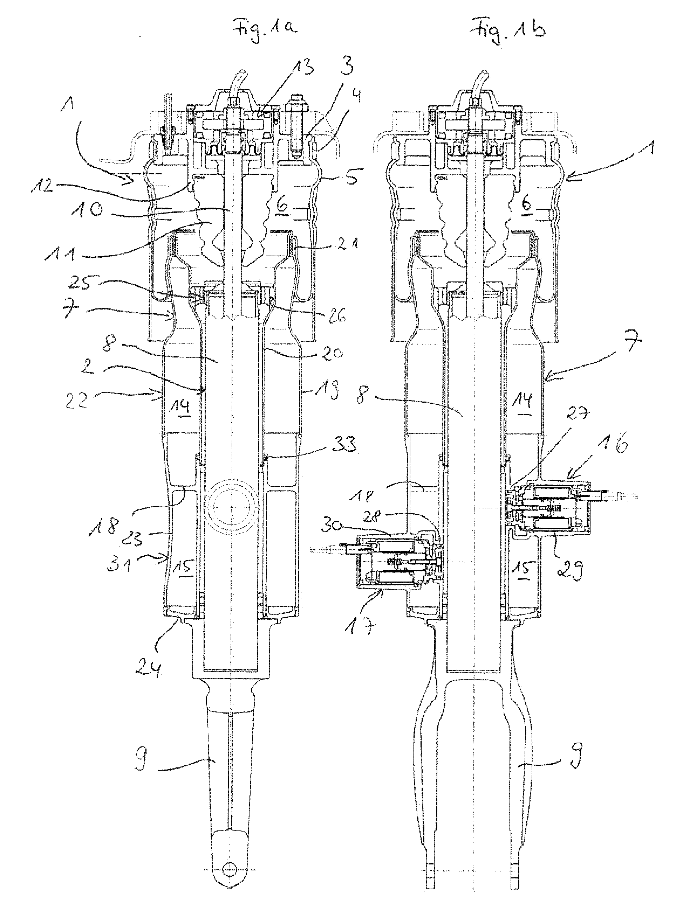

Fig. 1a zeigt einen Ausschnitt eines ersten Ausführungsbeispiels eines Luftfedermoduls, welches bekanntermaßen aus einer Luftfeder 1 und einem Stoßdämpfer 2 zur Federung und Dämpfung von Schwingungen eines Kraftfahrzeugfahrwerkes besteht, welches im Kraftfahrzeug vorzugsweise an einem ersten Ende karosseriefest und an einem zweiten Ende an einer Radaufhängung befestigbar ist. Die Luftfeder 1 besteht aus einem karosseriefesten Luftfederdeckel 3, einem daran luftdicht mit einem Klemmelement 4 befestigten ersten Ende eines Rollbalges 5, welcher einen ersten, mit Druckluft gefüllten Arbeits- bzw. Druckraum 6 mindestens teilweise begrenzt. Ein zweites Ende des Rollbalges 5 ist luftdicht mit einem Abrollkolben 7 verbunden. Der Abrollkolben 7, auf welchem der Rollbalg 5 abrollen kann, ist an einem Zylinderrohr 8 des Stoßdämpfers 2 verbunden, wobei an das Zylinderrohr 8 vorzugsweise an der die Radaufhängung befestigbare Dämpfergabel 9 befestigt ist. Ein zweites Ende des Zylinderrohres weist an einer Stirnfläche eine Bohrung für eine Kolbenstange 10 des Stoßdämpfers 2 auf, wobei sich bei fast vollständiger Einfederung des Luftfedermoduls die Stirnfläche des Zylinderrohrs 8 an einer Zusatzfeder 11 abstützt, die konzentrisch zu einer Kolbenstange 10 des Stoßdämpfers 2 angeordnet ist. Die Zusatzfeder 11 wird in einem Führungsring 12 geführt, welcher mit dem Luftfederdeckel 3 fest verbunden ist.

Ein im Luftfederdeckel 3 angeordnetes Dämpferlager 13, welches die Kolbenstange 10 des Stoßdämpfers 2 mit dem Luftfederdeckel 3 verbindet, hat die Aufgabe, hochfrequente Anregungen - bedingt durch die Straßenoberfläche - herauszufiltern und so die systembedingte Trägheit des Stoßdämpfers 2 zu umgehen, welche sich negativ auf den Fahrkomfort auswirken würde.

Um zwischen verschiedenen Modi des Luftfedermoduls umschalten zu können, weist die Luftfeder zwei weitere Arbeitsräume 14, 15 auf, deren Zusatzvolumen (ZV) über schaltbare Ventile 16, 17 mit dem ersten Arbeitsraum 6 verbindbar sind, welche in Fig. 1b - einer um 90°-gedrehten Schnittdarstellung von Fig. 1a - dargestellt sind.

Bei diesen drei Volumen können die Zusatzvolumen 1 und 2 abgetrennt werden, so dass nur V0, d.h. das Volumen des ersten Arbeitsraumes 6, alleine federt. Öffnet man das Ventil 16, dann ist das Zusatzvolumen 1 des zweiten Arbeitsraumes 14 zugeschaltet und es stehen die Volumen V0 + ZV1 zur Verfügung. Wird dagegen das Ventil 17 geöffnet, wird das Zusatzvolumen 2 des zweiten Arbeitsraumes 15 zugeschaltet und stehen die Volumen V0 + ZV2 zur Verfügung. Sind beide Ventile 16, 17 geöffnet, stehen die Volumen V0 + ZV1 + ZV2 zur Verfügung. Es sind also die Gesamtvolumen V0, V0 + ZV1, V0 + ZV2 und V0 + ZV1 + ZV2 schaltbar. Durch entsprechende Wahl der Größe der Zusatzvolumen können so sehr fein gestaffelte Volumen und somit auch Federraten verwirklicht werden.
Dabei ergibt das kleine Volumen V0 allein eine sportliche und harte, das großes Volumen V0 + ZV1 + ZV2 eine komfortable und weiche Federrate.

Der zweite und der dritte Arbeitsraum 14, 15 sind im Abrollkolben 7 übereinander, das Zylinderrohr 8 umgebend angeordnet und durch einen im Abrollkolben 7 vorgesehenen Zwischenboden 18 voneinander getrennt. Wie ersichtlich ist, erhöhen diese beiden zusätzlichen Arbeitsräume 14,15 den axialen Bauraumbedarf des Luftfedermoduls im Vergleich zu einer Anordnung im Luftfederdeckel 3 nicht bzw. nicht wesentlich und die Ventile 16, 17 können in einfacher Weise direkt am Abrollkolben 7 angeordnet werden.

Der Abrollkolben 7 weist ein Außenrohr 19 mit einer Klemmkontur auf, an dem der Rollbalg 5 mittels eines Klemmelementes 21 befestigt ist und auf welchem der Rollbalg 5 abrollt. Ein Innenrohr 20, mit welchem der Abrollkolben 7 auf dem Zylinderrohr 8 positioniert ist, ist mit dem Außenrohr 19 im Bereich der Klemmkontur luftdicht verbunden. Die Verbindung erfolgt beispielsweise mit einer Rollnahtschweißung, die beim Walzen des Klemmprofiles zeitgleich hergestellt werden kann.

Wie aus den Fig. 1a und 1b ersichtlich wird, ist der Abrollkolben 7 mehrteilig ausgebildet und weist wenigstens ein Kolbenteil, welches bei diesem Ausführungsbeispiel selbst mehrteilig aus einem Kolbenoberteil 22 und einem Kolbenunterteil 23 vorgesehen ist, sowie einen Boden 24 auf. Der Boden 24 verschließt das Kolbenunterteil 23, in welchem der Zwischenboden 18 vorgesehen ist. Durch den Boden 24 können Einzelteil-Toleranzen über die Gesamtlänge eliminiert werden.

Eine aus Kunststoff vorgesehene Kippsicherung 25 ist in einer vollständig oder unterbrochen umlaufenden Sicke 26 des Innenrohres 20 spielfrei fixiert und ermöglicht eine gesicherte Befestigung des Abrollkolbens 7 auf dem Zylinderrohr 8 und gleichzeitig ein Luftaustausch des zweiten und dritten Arbeitsraumes 14, 15 mit dem ersten Arbeitsraum 6 in einfacher Weise ohne dass aufwendige konstruktive Maßnahmen zum Luftaustausch vorgesehen werden müssen.

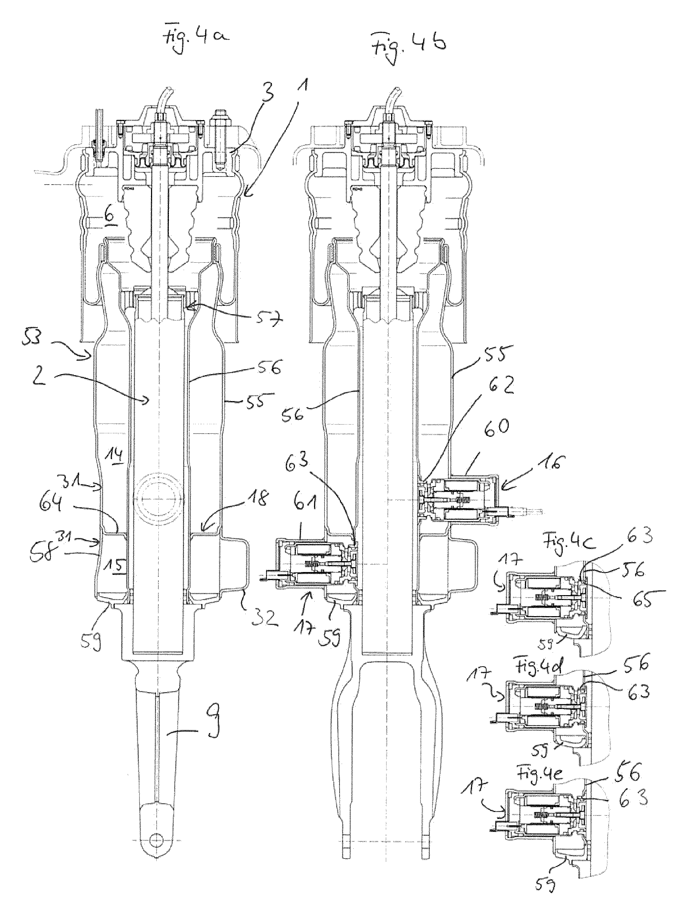

Innen- und Außenrohr 19, 20 werden beispielsweise durch Rollieren von Aluminium- oder Stahl-Blech hergestellt. Das Kolbenunterteil 23 dagegen ist vorzugsweise aus AluminiumDruckguß vorgesehen, wobei aber auch dünnwandiger Stahlguß denkbar ist. Dies hat den Vorteil, dass der Zwischenboden 18 zwischen den beiden Arbeitsräumen 14, 15 integriert und dicht ist. Ebenso sind Ventilsitze 27, 28 und Ventilaufnahmen 29, 30 direkt ins Kolbenunterteil 23 integriert, so dass dieses eine komplette funktionale und fertigungstechnische Einheit bildet. Auch können im Kolbenunterteil 23 beliebige Dellen 31 und Beulen 32 (in Fig. 4a gezeigt) untergebracht werden. So wird sichergestellt, dass auch in engen Bauräumen und bei ungünstigen kinematischen Stellungen stets genug Freigang zu Nachbarbauteilen erhalten bleibt.

Das Kolbenoberteil 22 wird so auf das Kolbenunterteil 23 aufgesetzt, dass beide Teile beispielsweise durch Reibrührschweißen luftdicht verschweißt werden können. Prinzipiell ist aber auch jedes andere Schweißverfahren möglich. Das Innenrohr 20 wird dagegen nur in das Kolbenunterteil 23 eingesteckt, wo es mit einer Dichtung 33 gedichtet wird, vorzugsweise mit einem O-Ring.

Nach der Montage des Bodens 24 werden Kolbenunterteil 23 und Boden 24 außen vorzugsweise durch Reibrührschweißen und innen durch Schmelzschweißen verschweißt.

Auf diese Art und Weise wird ein stabiler Abrollkolben 7 mit flexiblem Volumen und flexibel anpaßbarem Freigang zu Nachbarbauteilen hergestellt, der zudem wirtschaftlich zu fertigen ist.

In der dargestellten Form ist der Boden 24 gerade und die Ventile 16, 17 sind so positioniert, dass sie jeweils Zugang zu einem der beiden Zusatzvolumen 14, 15 schaffen. Aber es ist auch möglich, den Boden 24 beliebig zu gestalten und so die Volumenanteile flexibel an die jeweiligen Anforderungen anzupassen.

Die nachfolgend beschriebenen Ausführungsbeispiele entsprechen in ihrem grundsätzlichen Aufbau dem ersten Ausführungsbeispiel, so dass nachfolgend lediglich jeweils auf die Unterschiede zu den anderen Ausführungsbeispielen eingegangen wird.

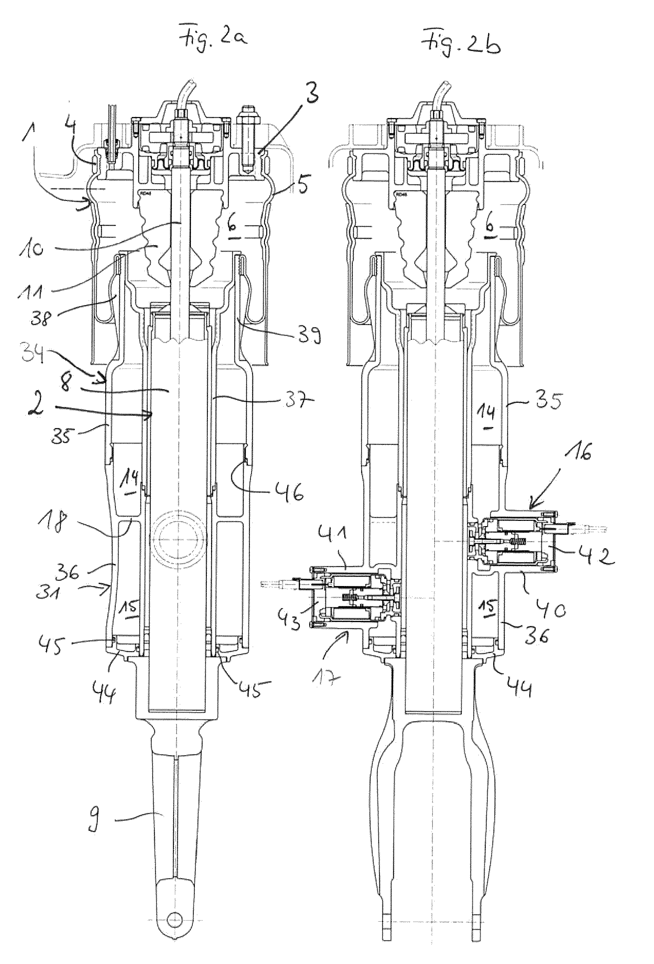

Im Unterscheid zum ersten Ausführungsbeispiel weist das zweite Ausführungsbeispiel gemäß den Fig. 2a und 2b einen Abrollkolben 34 mit einem Kolbenoberteil 35 und einem Kolbenunterteil 36 aus Kunststoff auf. Eine separate Kippsicherung entfällt, da sie in ein Innenrohr 37 des Kolbenoberteils 35 integriert wird. Alle Teile sind damit einfach und wirtschaftlich herzustellende Kunststoff-Spritzgußteile.

Erfordert die geforderte Federsteifigkeit einen großen Kolbenwinkel oder sollen viele Fahrzeugvarianten mit differierenden Gewichten abgedeckt werden, dann kann der Abrollkolben 34 zusätzlich mit einem Kolbenhemd 38 versehen werden. In diesem Fall bleibt ein Außenrohr 39 für alle Varianten gleich und nur das Kolbenhemd 38 wird ausgetauscht. Entsprechend wirtschaftlicher und flexibler können die Teile gefertigt werden.

Das Außenrohr 39 ist so gestaltet, dass keine Hinterschnitte vorliegen. Das Werkzeug und der Fertigungsprozeß werden daher einfach und wirtschaftlich. Dasselbe gilt für das Innenrohr 37. Trotz Integration der Kippsicherung ist eine wirtschaftlichere Fertigung möglich. Außen-und Innenrohr 37, 39 werden im Bereich der Klemmkontur luftdicht verschweißt, wobei mehrere geeignete Schweißverfahren zur Auswahl stehen.

Das Kolbenunterteil 36 unterscheidet sich nicht wesentlich vom Kolbenunterteil 23 des ersten Ausführungsbeispiels, besitzt allerdings größere Wandstärken. Dies ist der geringeren Festigkeit von Kunststoff gegenüber von Aluminium-Druckgußwerkstoffen geschuldet.

Der Übergang zum Außenrohr 39 ist als Ringschnappverbindung gestaltet. Die Verbindung zum Innenrohr 37 ist hinterschnittfrei und somit mit einfachen, zuverlässigen Werkzeugen zu fertigen. Gleiches gilt für die Ventilaufnahmen 40, 41 und Ventilhalterungen 42, 43, welche hinterschnittfrei mittels Kunststoffschrauben definiert sind.

Ein Boden 44 ist so gestaltet, dass das Kolbenunterteil 36 - nach Einsetzen von Dichtungen 45 - vorzugsweise O-Ringe - einfach übergeschoben werden kann. Im Betrieb wirken nur Kräfte nach unten, so dass beide Teile immer zusammengepreßt werden.

Die Ringschnappverbindung ist am Kolbenunterteil 36 so gestaltet, dass sie einerseits verhindert, im drucklosen Zustand auseinanderzufallen und andererseits, dass eine Dichtung 46 - vorzugsweise ein O-Ring - optimal sitzt und beim Zusammenfügen beider Teile nicht beschädigt werden kann.

Hervorzuheben ist auch hier wieder, dass die Delle 31 im Kolbenunterteil 36 für Freigänge zu benachbarten Bauteilen einfach und wirtschaftlich integriert werden kann.

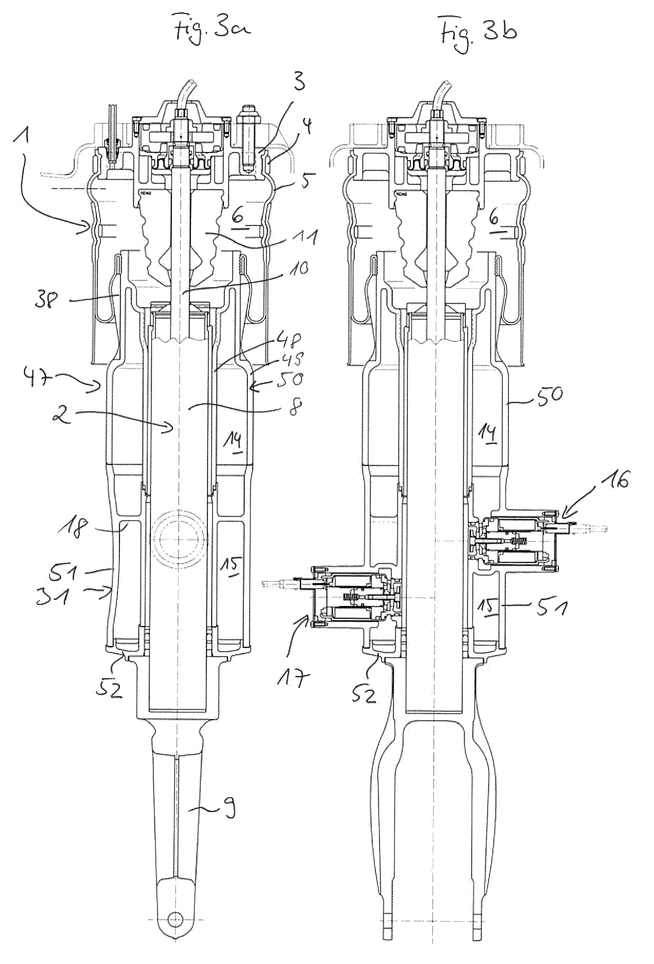

Die dritte Ausführungsform gemäß den Fig. 3a und 3b weist ebenfalls einen Abrollkolben 47 aus Kunststoff auf. Sie unterscheidet sich zur zweiten Ausführungsform lediglich darin, dass ein Außen- und ein Innenrohr 48, 49 eines Kolbenoberteils 50 einteilig ausgebildet sind. Somit entfällt die Schweißverbindung zwischen Innen- und Außenrohr 48, 49, wodurch die Dichtigkeit / Dichtsicherheit zwischen Innen- und Außenrohr 48, 49 gesteigert wird.

Anstelle der zu Fig. 2a beschriebenen Ringschnappverbindung und Dichtung 46 zwischen Außenrohr 49 und Kolbenunterteil 51 wird das Kolbenoberteil 50 mit einer Kunststoff-Schweißverbindung luftdicht mit dem Kolbenunterteil 51 verschweißt, wobei die Detailgestaltung der Schweißnaht nicht dargestellt ist.

Ein Boden 52 ist ebenfalls aus Kunststoff vorgesehen und wird mit dem Kolbenunterteil 51 durch eine Kunststoffschweißung luftdicht verbunden. Der Vorteil ist eine höhere Steifigkeit des Abrollkolbens 47 sowie eine einfachere Montage des Abrollkolbens 47 im Luftfedermodul.

Ein viertes Ausführungsbeispiel ist in den Fig. 4a und 4b dargestellt. Es zeigt einen Abrollkolben 53 aus Aluminium-oder Stahlblech.

Der Abrollkolben 53 besteht aus einem Kolbenoberteil 54 mit Außen- und Innenrohr 55, 56, Kippsicherung 57, Kolbenunterteil 59, Boden 59 und Ventilaufnahmen 60, 61. Alle Teile sind luftdicht miteinander verschweißt, wobei verschiedene Schweißverfahren genutzt werden können. Eine Ausnahme ist nur die Kippsicherung 57 aus Kunststoff, welche - wie bei Fig. 1a - im Innenrohr 56 durch eine Sicke fixiert wird.

Das Innenrohr 56 erstreckt sich bei diesem Ausführungsbeispiel über die ganze Kolbenlänge nach unten. Im Klemmbereich ist es luftdicht - vorzugsweise durch Pressschweißen - mit dem Außenrohr 55 verbunden. Im Bereich von Ventilsitzen 62, 63 ist es aufgeweitet und direkt vor dem Boden 59 wieder eingezogen - so dass es optimal zu nicht dargestellten Dichtungen paßt - und das Ende ist leicht kegelig aufgeweitet, so dass es über die Dichtungen geschoben werden kann, ohne diese zu beschädigen. Zusätzlich besitzt das Innenrohr 56 direkt an den Ventilsitzen 62, 63 jeweils eine ebene Anprägung, welche gelocht ist.

Das Außenrohr 55 ist tief nach unten gezogen. Direkt unter dem oberen Ventil 16 ist es eingezogen und mit einem Kragen 64 versehen. So bildet es den Zwischenboden 18, der die Arbeitsräume 14, 15 trennt. Am Kragen 64 ist das Außenrohr 55 luftdicht umlaufend mit dem Innenrohr 56 verschweißt und bildet so den zweiten Arbeitsraum 14 (= Zusatzvolumen 1). Weil das Innenrohr 56 im Bereich des Kragens 64 die beschriebene ebene Anprägung hat, ist auch Kragen 64 entsprechend angepaßt geformt, so dass beide Teile paßgenau zusammenpassen und ein gleichmäßiger Spalt entsteht, der durch das Schweißen sicher verschlossen werden kann.

Am Übergang von Außenrohr 55 zum Boden 59 ist das Außenrohr 55 leicht im Durchmesser eingezogen. Dies dient der Zentrierung des Kolbenunterteils 58, wie nachfolgend noch beschrieben wird. Auch besitzt es Dellen 31, welche dafür sorgen, dass ausreichend Freigang zu Nachbarbauteilen im Fahrzeug besteht. Und im Bereich des oberen Ventils 16 besitzt es - analog zum Innenrohr 56 - eine ebene Anprägung, welche gelocht ist. Auf diese Anprägung wird dann die Ventilaufnahme 60 aufgeschweißt.

Das Kolbenunterteil 58 ist in diesem Ausführungsbeispiel ein Rohr, das als Verlängerung des Außenrohrs 55 des Kolbenoberteil 53 dient und so den dritten Arbeitsraum 15 bildet. Es ist so geformt, dass es die Dellen 31 des Außenrohrs 55 fortführt und so ebenfalls ausreichend Freigang zu Fahrzeug-Nachbarbauteilen hat. Im Bereich des unteren Ventils 17 besitzt es ebenfalls eine ebene Anprägung, welche ebenfalls gelocht ist. Auch hier wird die Ventilaufnahme 61 aufgeschweißt.

Entsprechend dem benötigten Volumen besitzt das Kolbenunterteil 58 ferner beliebig geformte Beulen 32 nach außen. Diese vergrößern das Volumen in genau den Bereichen, in welchen im Fahrzeug ausreichend Platz ist.

Der Boden 59 dient als unterer Abschluß des Abrollkolbens 53 und zur Krafteinleitung in die Dämpfergabel 9. Prinzipiell bestehen hier verschiedene Ausgestaltungsmöglichkeiten, welche in den Fig. 4c, 4d und 4e dargestellt sind, wobei auch weitere Ausführungsformen denkbar sind. Die beiden Ausführungsformen des Bodens 59 gemäß den Fig. 4b und 4e sind als Druckguß einfach und wirtschaftlich herstellbar und haben jeweils eine Zentrierung zur Dämpfergabel 9 integriert. Dagegen sind die Ausführungsformen gemäß den Fig. 4c und 4d als Tiefzieh- oder Preßteile ausgeführt, was in der Regel wirtschaftlicher ist, jedoch um den Preis der fehlenden Zentrierung.

Die Ventilaufnahmen 60, 61 werden aus Rohrmaterial geformt oder aus Ronden tiefgezogen und ein Boden ausgestanzt, wodurch eine wirtschaftliche Fertigung möglich ist. Sie werden mittels luftdichter Schweißung auf die Anprägungen des Außenrohrs 55 aufgeschweißt.

Die Ventilsitze 63 unterscheiden sich in den Fig. 4b bis 4e. Die in den Fig. 4b und 4e dargestellte Ausführungsform kann auf verschiedene Weise wirtschaftlich hergestellt werden, nämlich beispielsweise aus einem Rohr durch Anformung eines Kragens. Möglich ist aber auch die Herstellung durch Kaltfließpressen oder Tiefziehen. Sie werden von innen durch Bohrungen des Innenrohres 56 geschoben und können mittels Preßschweißen luftdicht mit dem Innenrohr 56 verbunden werden.

Die Ausführungen gemäß den Fig. 4a bis 4e sind so gestaltet, dass alle Teile wirtschaftlich hergestellt werden können. Ferner besteht der Vorteil, dass auch die Montage aller Teile - trotz der Komplexität des Gesamtsystems - schnell, einfach und sicher und somit wirtschaftlich erfolgen kann. Zunächst wird dazu die Kippsicherung 57 im Innenrohr 56 verrollt oder vercrimpt. Anschließend werden Innen-und Außenrohr 55, 56 im Klemmbereich miteinander verrollt, wobei auch die luftdichte Schweißung hergestellt wird. Der Kragen 64 des Außenrohrs 55 wird dann unten mit dem Innenrohr 55 luftdicht verschweißt, so dass das Zusatzvolumen 1 (Arbeitsraum 14) gebildet ist. Jetzt kann der Boden 59 an das Innenrohr 56 geschweißt und das kegelige Innenrohrende geformt werden. Das Kolbenunterteil 58 wird nun so übergeschoben, dass es am Außenrohr 55 und Boden 59 anliegt. Beide Enden werden verschweißt, wodurch das auch das Zusatzvolumen 2 (Arbeitsraum 15) gebildet ist.

Danach können die Ventilsitze 62, 63 von unten durch das Innenrohr 56 eingeschoben und mittels Preßschweißung luftdicht verbunden werden. Und zum Schluß werden die Ventilaufnahmen 60, 61 zu den Ventilsitzen 62, 63 radial fluchtend ausgerichtet und ebenfalls luftdicht angeschweißt. Es wurde so durch einfache, wirtschaftliche Montageschritte ein stabiles Kolbensystem erzeugt.

Eine leicht andere Montagereihenfolge ist ebenfalls möglich und wirtschaftlich.

Die Varianten der Ventilsitze 62, 63 unterscheiden sich nur geringfügig in der Reihenfolge der Montage. Bei den Fig. 4c und 4d werden die Ventilsitze 63 nicht pressgeschweißt, sondern so verstemmt, dass das Innenrohr-Material in die Bohrungsmitte fließt und so die Ventilsitze 63 festklemmt. Die Dichtung erfolgt dann durch eine eingelegte Dichtung 65, vorzugsweise einen O-Ring.

Die Verbindung des Bodens 59 mit dem Innenrohr 56 gemäß den Fig. 4b und 4c erfolgt vorzugsweise durch Schweißen von außen. Es ist aber auch möglich, von innen zu schweißen, wobei das Kolbenunterteil 56 erst danach montiert werden darf. Bei Fig. 4e ist eine Schweißung von innen von vornherein vorgesehen. Im Falle von Fig. 4d ist alternativ auch Außenschweißung möglich.

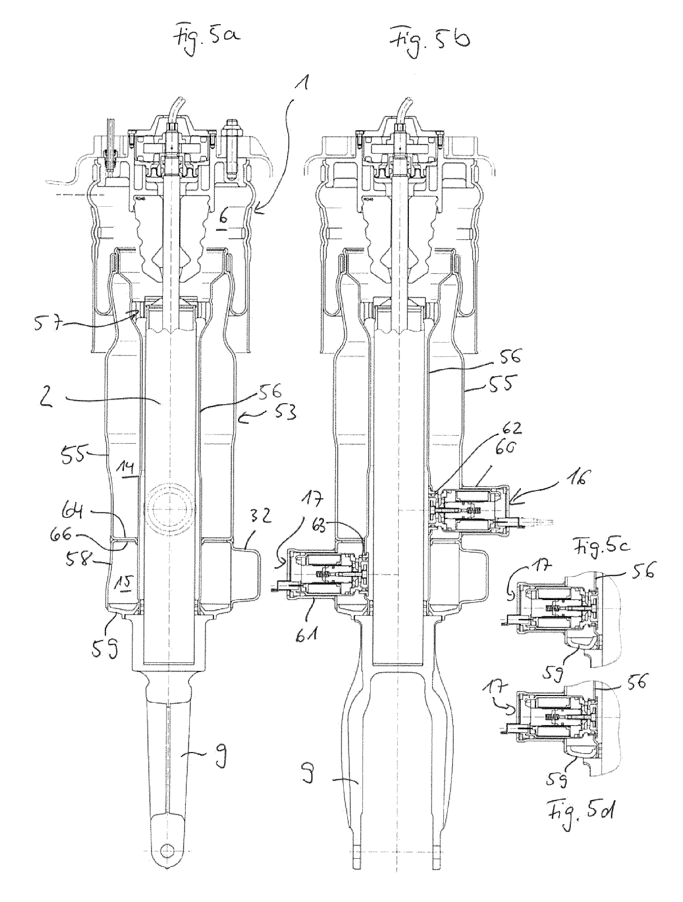

Das fünfte Ausführungsbeispiel gemäß den Fig. 5a bis 5d unterscheidet sich zum vorhergehenden dadurch, dass das Außenrohr 55 am Übergang zum Kolbenunterteil 58 nicht eingezogen ist. Stattdessen ist das Kolbenunterteil 58 oben mit einem Kragen 66 versehen. Infolgedessen ist es auch nicht möglich, zuerst den Boden 59 anzuschweißen und dann das Kolbenunterteil 58 überzuschieben. Diese mögliche Montagereihenfolge entfällt. Auch diese Ausführungsform ermöglicht, dass die Einzelteile wirtschaftlich herzustellen und zu montieren sind.

Bei den Ausführungsbeispielen gemäß den Fig. 4a bis e und Fig. 5a bis d war das Kolbenunterteil 58 jeweils so ausgebeult, dass das Zusatzvolumen 2 des Arbeitsraums 15 ausreichend groß werden konnte. Dafür war der Kragen 64 des Außenrohres 56 gerade, was eine Fertigungsvereinfachung bei diesem Teil bedeutet.

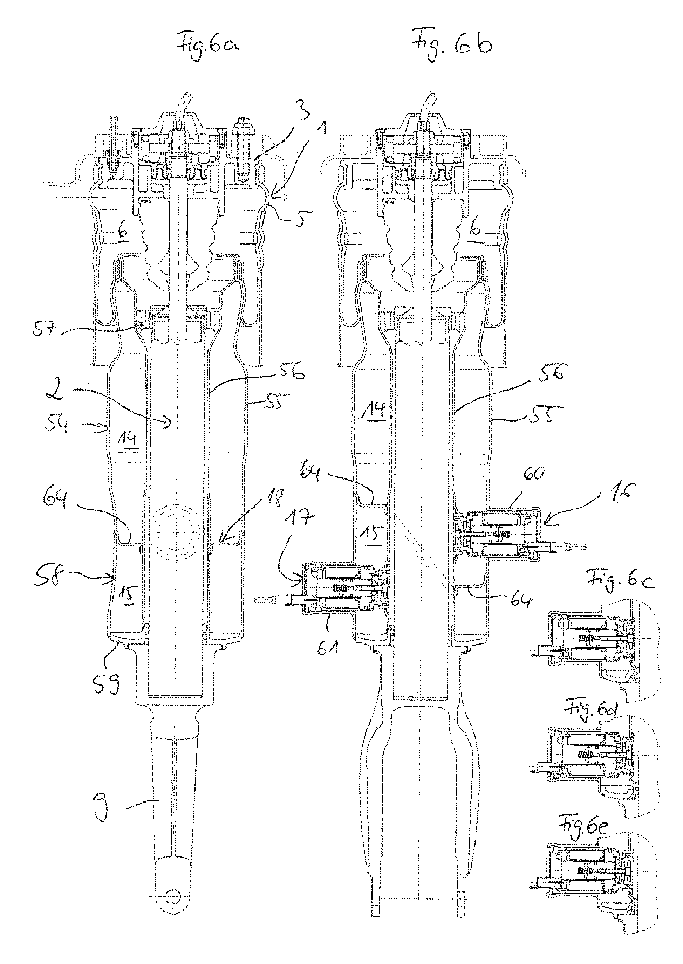

Bei dem sechsten Ausführungsbeispiel gemäß den Fig. 6a bis e ist der Kragen 64 am Außenrohr 55 stufenförmig oder schräg gestaltet, wie insbesondere aus Fig. 6b hervorgeht. Dadurch wird das Zusatzvolumen 2 größer und es kann - muß aber nicht - auf die Ausprägung der Beule 32 am Kolbenunterteil 58 verzichtet werden. Dies ist vor allem vorteilhaft, wenn kein Platz für eine volumenvergrößernde Beule im Fahrzeug ist.

Die weitere Gestaltung und Montage entspricht den beiden vorstehend beschriebenen Ausführungsbeispielen mit deren spezifischen wirtschaftlichen und technischen Vorteilen.

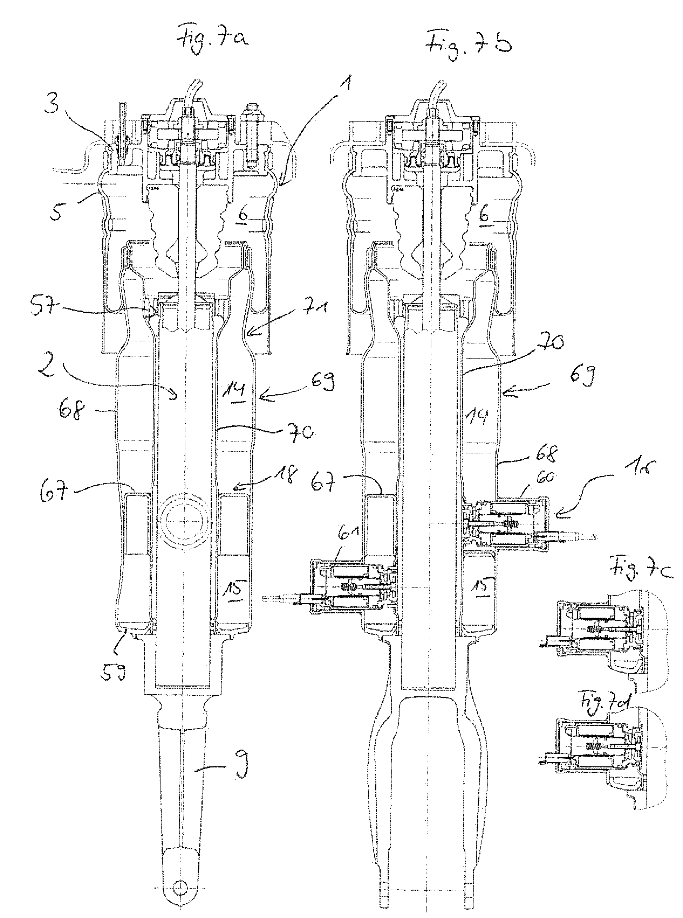

Auch die Varianten des siebten Ausführungsbeispiels gemäß den Fig. 7a bis 7d entsprechen weitgehend den Ausführungsbeispielen vier bis sechs. Der Unterschied besteht vor allem darin, dass der Zwischenboden 18, der zuvor durch das Außenrohr 55 gebildet wurde, nun durch ein separates Bauteil 67 gebildet wird. Dadurch ist es möglich, ein Außenrohr 68 eines Kolbenteils 69 vom Klemmbereich oben bis unten zum Boden 59 einteilig zu machen. Kräfte müssen dann nicht über die Schweißnaht übertragen werden und eine Dichtstelle nach außen entfällt, was der Funktionssicherheit zugutekommt. Ein Innenrohr 70 bleibt im Vergleich zu den genannten Ausführungsbeispielen weitgehend gleich.

Weil der Zwischenboden 18 als separates Bauteil 67 durch ein relativ einfaches Tiefziehteil gebildet werden kann, kann mit ihm das Zusatzvolumen 2 des Arbeitsraums 15 flexibler angepaßt werden, indem die Ausformung nach oben oder unten je nach Bedarf gewählt wird. Die Montage ist dann sehr einfach, denn nachdem Außen- und Innenrohr 68, 70 oben luftdicht miteinander verschweißt sind, braucht nur der Zwischenboden 18 unten eingeschoben und am Innen- und Außenrohr 68, 70 luftdicht verschweißt zu werden. Die weiteren Montageschritte können dann wie bei den vorstehenden Ausführungsbeispielen ablaufen. Es entsteht ein robuster, dichter und funktionssicherer Abrollkolben 71, der zudem sehr wirtschaftlich hergestellt werden kann.

Die nachfolgend beschriebenen Ausführungsbeispiele beschreiben unterschiedliche Ventilsitzvarianten. Diese können grundsätzlich in allen verstehend beschriebenen Ausführungsbeispielen eingesetzt werden.

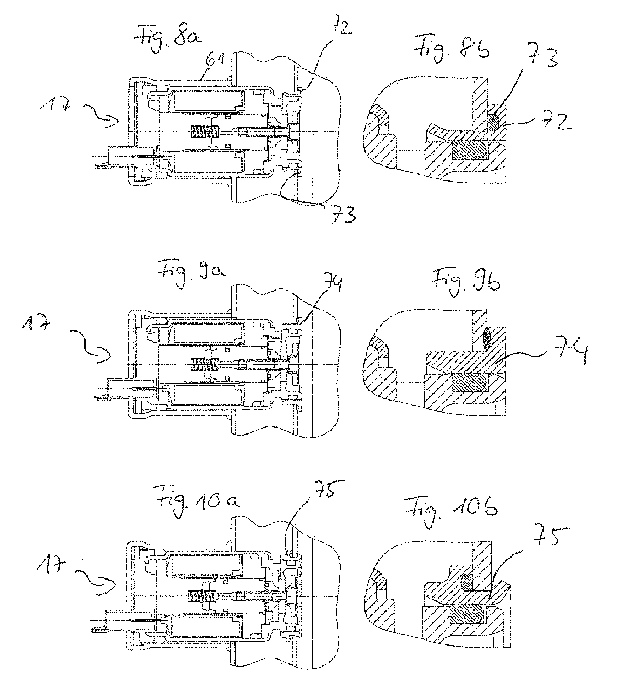

Fig. 8a und 8b zeigen einen Ausschnitt eines achten Ausführungsbeispiels. Wie zu erkennen ist, ist ein Ventilsitz 72 so verstemmt, dass das Innenrohr-Material in Bohrungsmitte fließt und so den Ventilsitz festklemmt. Die Dichtung erfolgt dann durch eine eingelegte Dichtung 73, vorzugsweise einen O-Ring.

Ein Ventilsitz 74 eines neunten Ausführungsbeispiels ist dagegen aus einem Rohr durch Anformung eines Kragens hergestellt. Mögliche Herstellungsverfahren des Ventilsitzes 74 sind jedoch auch Kaltfließpressen oder Tiefziehen. Die Ventilsitze 74 werden von innen durch die Bohrungen des jeweiligen Innenrohres geschoben und können mittels Preßschweißen luftdicht mit dem Innenrohr verbunden werden.

Im Unterschied zu den Ventilsitzen 72 und 74 kann ein Ventilsitz 75 eines zehnten Ausführungsbeispiels von außen eingesetzt und durch ein Umbiegen des inneren Randes sicher fixiert werden. Damit ist dieser Ventilsitz 75 besonders bei weicheren Werkstoffen wie Aluminium-Legierungen geeignet.

### Bezugszeichenliste

- 1: Luftfeder
- 2: Stoßdämpfer
- 3: Luftfederdeckel
- 4: Klemmelement
- 5: Rollbalg
- 6: Arbeitsraum
- 7: Abrollkolben
- 8: Zylinderrohr
- 9: Dämpfergabel
- 10: Kolbenstange
- 11: Zusatzfeder
- 12: Führungsring
- 13: Dämpferlager
- 14: Arbeitsraum
- 15: Arbeitsraum
- 16: Ventil
- 17: Ventil
- 18: Zwischenboden
- 19: Außenrohr
- 20: Innenrohr
- 21: Klemmelement
- 22: Kolbenoberteil
- 23: Kolbenunterteil
- 24: Boden
- 25: Kippsicherung
- 26: Sicke
- 27: Ventilsitz
- 28: Ventilsitz
- 29: Ventilaufnahme
- 30: Ventilaufnahme
- 31: Delle
- 32: Beule
- 33: Dichtung
- 34: Abrollkolben
- 35: Kolbenoberteil
- 36: Kolbenunterteil
- 37: Innenrohr
- 38: Kolbenhemd
- 39: Außenrohr
- 40: Ventilaufnahme
- 41: Ventilaufnahme
- 42: Ventilhalterung
- 43: Ventilhalterung
- 44: Boden
- 45: Dichtung
- 46: Dichtung
- 47: Abrollkolben
- 48: Innenrohr
- 49: Außenrohr
- 50: Kolbenoberteil
- 51: Kolbenunterteil
- 52: Boden
- 53: Abrollkolben
- 54: Kolbenoberteil
- 55: Außenrohr
- 56: Innenrohr
- 57: Kippsicherung
- 58: Kolbenunterteil
- 59: Boden
- 60: Ventilaufnahme
- 61: Ventilaufnahme
- 62: Ventilsitz
- 63: Ventilsitz
- 64: Zwischenboden
- 65: Dichtung
- 66: Kragen
- 67: Bauteil
- 68: Außenrohr
- 69: Kolbenteil
- 70: Innenrohr
- 71: Abrollkolben
- 72: Ventilsitz
- 73: Dichtung
- 74: Ventilsitz
- 75: Ventilsitz

## Patentansprüche

1. Luftfedermodul bestehend aus einer Luftfeder (1) und einem Stoßdämpfer (2) zur Federung und Dämpfung von Schwingungen eines Kraftfahrzeugfahrwerkes, mit
- wenigstens zwei mit Druckluft gefüllten Arbeitsräumen, welche über wenigstens ein Ventil verbindbar sind,
- einem Luftfederdeckel (3),
- einem daran befestigten luftdichten Rollbalg (5), welcher einen mit Druckluft gefüllten ersten Arbeitsraum (6) mindestens teilweise begrenzt,
- einem Abrollkolben (7;34;53;47;71), welcher an einem Zylinderrohr (8) des Stoßdämpfers (2) befestigt ist und auf dem der Rollbalg (5) abrollt,
**dadurch gekennzeichnet, dass** im Abrollkolben (7;34;47;53;71) ein zweiter sowie ein dritter Arbeitsraum (14,15) übereinander, das Zylinderrohr (8) umgebend angeordnet sind, welche durch einen im Abrollkolben (7; 34; 47; 53; 71) vorgesehenen Zwischenboden (18) getrennt voneinander vorgesehen und über schaltbare, im Abrollkolben (7;34;47;53;71) angeordnete Ventile (16,17) mit dem ersten Arbeitsraum (6) verbindbar sind.

2. Luftfedermodul nach Anspruch 1, **dadurch gekennzeichnet, dass** der Abrollkolben (7;34;47;53;71) wenigstens ein Außenrohr (19;39;49;55;68) mit einer Klemmkontur aufweist, an dem der Rollbalg (5) mittels eines Klemmelementes (4) befestigt ist und auf welchem der Rollbalg (5) abrollt, und dass ein Innenrohr (20;37;48;56;70) vorgesehen ist, mit welchem der Abrollkolben (7;34;47;53;71) auf dem Zylinderrohr (8) positioniert ist, wobei das Innen-(20;37;48;56;70) und das Außenrohr (19; 39; 49; 55; 68) im Bereich der Klemmkontur luftdicht verbunden sind.

3. Luftfedermodul nach Anspruch 1 oder 2, **dadurch gekennzeichnet, dass** der Abrollkolben (7;34;47;53;71) mehrteilig ausgebildet ist und wenigstens ein Kolbenteil (69) sowie einen Boden (24;44;52;59) aufweist.

4. Luftfedermodul nach Anspruch 3, **dadurch gekennzeichnet, dass** der Zwischenboden (18) als separates Bauteil (67) vorgesehen ist, welches luftdicht in dem Kolbenteil befestigt ist.

5. Luftfedermodul nach Anspruch 3, **dadurch gekennzeichnet, dass** das Kolbenteil des Abrollkolbens (7;34;47;53) mehrteilig ausgebildet ist und wenigstens ein Kolbenober-(22;35;50;54) und ein Kolbenunterteil (23;36;51;58) aufweist, wobei der Zwischenboden (18) in dem Kolbenoberteil (22;35;50;54) oder in dem Kolbenunterteil (23;36;51;58) vorgesehen ist, welches mit dem Boden (24;44;52;59) luftdicht verschließbar ist.

6. Luftfedermodul nach einem der vorangegangenen Ansprüche 1 bis 5, **dadurch gekennzeichnet, dass** der Abrollkolben (7;34;47;53;71) eine Kippsicherung (25;57) aufweist, welche eine gesicherte Befestigung auf dem Zylinderrohr (8) und gleichzeitig ein Luftaustausch des zweiten und dritten Arbeitsraumes (14,15) mit dem ersten Arbeitsraum (6) ermöglicht.

7. Luftfedermodul nach Anspruch 2 und 6, **dadurch gekennzeichnet, dass** die Kippsicherung (25;57) aus Kunststoff vorgesehen und in einer Sicke (26) des Innenrohres (20;56;70) spielfrei fixiert ist.

8. Luftfedermodul nach einem der vorangegangenen Ansprüche 4 bis 7, **dadurch gekennzeichnet, dass** an das Außenrohr (19; 39; 49; 55; 68) Ventilaufnahmen (29,30;40,41;60,61) für die Ventile (16,17) angeformt oder befestigt vorgesehen sind.

9. Luftfedermodul nach einem der vorangegangenen Ansprüche, **dadurch gekennzeichnet, dass** der Abrollkolben (7;53;71) aus Stahl und/oder aus Aluminium vorgesehen ist.

10. Luftfedermodul nach Anspruch 7, **dadurch gekennzeichnet, dass** der Abrollkolben (34;47) aus Kunststoff vorgesehen ist.

11. Luftfedermodul (1) nach Anspruch 9 oder 10, **dadurch gekennzeichnet, dass** das Kolbenober- und Kolbenuntereil (22;35;50;54) und ein Kolbenunterteil (23;36;51;58) miteinander verschweißt oder mittels einer Schnappverbindung luftdicht miteinander verbunden sind.

12. Luftfedermodul nach Anspruch 10 oder 11, **dadurch gekennzeichnet, dass** die Kippsicherung einteilig an das Innenrohr (37;48) angeformt vorgesehen ist.

## Claims

1. Air spring module comprising an air spring (1) and a shock damper (2) for spring cushioning and damping vibrations of a motor vehicle running gear, having
- at least two working chambers, which are filled with compressed air and can be connected by means of at least one valve,
- an air spring cover (3),
- an airtight rolling bellows (5), which is fixed to the air spring cover and at least partly delimits a first working chamber (6) filled with compressed air,
- a rolling piston (7; 34; 53; 47; 71), which is fixed to a cylinder tube (8) of the shock damper (2) and on which the rolling bellows (5) rolls,
**characterized in that** a second and a third working chamber (14, 15) are arranged one above the other in the rolling piston (7; 34; 47; 53; 71) so as to surround the cylinder tube (8), which working chambers are provided in such a way as to be separated from one another by an intermediate plate (18) provided in the rolling piston (7; 34; 47; 53; 71) and can be connected to the first working chamber (6) by means of switchable valves (16, 17) arranged in the rolling piston (7; 34; 47; 53; 71).

2. Air spring module according to Claim 1, **characterized in that** the rolling piston (7; 34; 47; 53; 71) has at least one outer tube (19; 39; 49; 55; 68) having a clamping contour, on which outer tube the rolling bellows (5) is fastened by means of a clamping element (4) and on which the rolling bellows (5) rolls, and **in that** an inner tube (20; 37; 48; 56; 70) is provided, by means of which the rolling piston (7; 34; 47; 53; 71) is positioned on the cylinder tube (8), wherein the inner tube (20; 37; 48; 56; 70) and the outer tube (19; 39; 49; 55; 68) are connected airtightly in the region of the clamping contour.

3. Air spring module according to Claim 1 or 2, **characterized in that** the rolling piston (7; 34; 47; 53; 71) is of multipart design and has at least one piston part (69) and one end plate (24; 44; 52; 59).

4. Air spring module according to Claim 3, **characterized in that** the intermediate plate (18) is provided as a separate component (67), which is fastened airtightly in the piston part.

5. Air spring module according to Claim 3, **characterized in that** the piston part of the rolling piston (7; 34; 47; 53) is of multipart design and has at least one piston top part (22; 35; 50; 54) and one piston bottom part (23; 36; 51; 58), wherein the intermediate plate (18) is provided in the piston top part (22; 35; 50; 54) or in the piston bottom part (23; 36; 51; 58), which can be closed airtightly with the end plate (24; 44; 52; 59).

6. Air spring module according to one of preceding Claims 1 to 5, **characterized in that** the rolling piston (7; 34; 47; 53; 71) has a tilt safeguard (25; 57), which allows secured fastening on the cylinder tube (8) and, at the same time, air exchange between the second and third working chambers (14, 15) and the first working chamber (6).

7. Air spring module according to Claim 2 and 6, **characterized in that** the tilt safeguard (25; 57) is made of plastic and is fixed without play in a bead (26) on the inner tube (20; 56; 70).

8. Air spring module according to one of preceding Claims 4 to 7, **characterized in that** valve receptacles (29, 30; 40, 41; 60, 61) for the valves (16, 17) are provided in such a way as to be formed or fastened on the outer tube (19; 39; 49; 55; 68).

9. Air spring module according to one of the preceding claims, **characterized in that** the rolling piston (7; 53; 71) is made of steel and/or of aluminum.

10. Air spring module according to Claim 7, **characterized in that** the rolling piston (34; 47) is made of plastic.

11. Air spring module (1) according to Claim 9 or 10, **characterized in that** the piston top part and piston bottom part (22; 35; 50; 54) and a piston bottom part (23; 36; 51; 58) are welded to one another or connected airtightly to one another by means of a snap joint.

12. Air spring module according to Claim 10 or 11, **characterized in that** the tilt safeguard is provided in such a way as to be formed integrally on the inner tube (37; 48).

## Revendications

1. Module de suspension pneumatique constitué d'une suspension pneumatique (1) et d'un amortisseur (2) qui suspend et amortit les oscillations du train de roulement d'un véhicule automobile, le module présentant
au moins deux espaces de travail remplis d'air comprimé et aptes à être reliés par au moins une soupape,
un couvercle (3) de suspension pneumatique,
un soufflet déroulant (5), étanche à l'air, qui y est fixé et qui délimite au moins en partie un premier espace de travail (6) rempli d'air comprimé,
un piston déroulant (7; 34; 53; 47; 71) qui est fixé sur un tube (8) de vérin de l'amortisseur (2) et sur lequel le soufflet déroulant (5) se déroule, **caractérisé en ce que**
un deuxième et un troisième espace de travail (14, 15) sont disposés l'un au-dessus de l'autre dans le piston déroulant (7; 34; 47; 53; 71) et entourent le tube cylindrique (8), sont séparés l'un de l'autre par un fond intermédiaire (18) prévu dans le piston déroulant (7; 34; 47; 53; 71) et peuvent être reliés au premier espace de travail (6) par des soupapes (16, 17) commutables disposées dans le piston déroulant (7; 34; 47; 53; 71).

2. Module de suspension pneumatique selon la revendication 1, **caractérisé en ce que** le piston déroulant (7; 34; 47; 53; 71) présente au moins un tube extérieur (19; 39; 49; 55; 68) présentant un contour de serrage sur lequel le soufflet déroulant (5) est fixé au moyen d'un élément serrant (4) et sur lequel le soufflet déroulant (5) se déroule et **en ce qu'**un tube intérieur (20; 37; 48; 56; 70) par lequel le piston déroulant (7; 34; 47; 53; 71) est positionné sur le tube cylindrique (8) est prévu, le tube intérieur (20; 37; 48; 56; 70) et le tube extérieur (19; 39; 49; 55; 68) étant reliés de manière hermétique à l'air au niveau du contour de serrage.

3. Module de suspension pneumatique selon les revendications 1 ou 2, **caractérisé en ce que** le piston déroulant (7; 34; 47; 53; 71) est réalisé en plusieurs pièces et présente au moins une partie de piston (69) ainsi qu'un fond (24; 44; 52; 59).

4. Module de suspension pneumatique selon la revendication 3, **caractérisé en ce que** le fond intermédiaire (18) est prévu en tant que composant séparé (67) fixé de manière hermétique à l'air dans la partie de piston.

5. Module de suspension pneumatique selon la revendication 3, **caractérisé en ce que** la partie de piston du piston déroulant (7; 34; 47; 53) est réalisée en plusieurs pièces et présente au moins une partie supérieure (22; 35; 50; 54) et une partie inférieure (23; 36; 51; 58) de piston, le fond intermédiaire (18) étant prévu dans la partie supérieure (22; 35; 50; 54) de piston ou dans la partie inférieure (23; 36; 51; 58) de piston qui peut être fermée de manière hermétique à l'air par le fond (24; 44; 52; 59).

6. Module de suspension pneumatique selon l'une des revendications précédentes 1 à 5, **caractérisé en ce que** le piston déroulant (7; 34; 47; 53; 71) présente une protection anti-basculement (25; 57) qui permet une fixation sûre sur le tube cylindrique (8) et en même temps un échange d'air entre le deuxième et le troisième espace de travail (14, 15) et le premier espace de travail (6).

7. Module de suspension pneumatique selon les revendications 2 et 6, **caractérisé en ce que** la protection anti-basculement (25; 57) est réalisée en matière synthétique et est fixée sans jeu dans une moulure (26) ménagée dans le tube intérieur (20; 56; 70).

8. Module de suspension pneumatique selon l'une des revendications précédentes 4 à 7, **caractérisé en ce que** des logements (29, 30; 40, 41; 60, 61) pour les soupapes (16, 17) sont formés ou fixés sur le tube extérieur (19; 39; 49; 55; 68).

9. Module de suspension pneumatique selon l'une des revendications précédentes, **caractérisé en ce que** le piston déroulant (7; 53; 71) est réalisé en acier et/ou en aluminium.

10. Module de suspension pneumatique selon la revendication 7, **caractérisé en ce que** le piston déroulant (34; 47) est réalisé en matière synthétique.

11. Module de suspension pneumatique (1) selon les revendications 9 ou 10, **caractérisé en ce que** la partie supérieure et la partie inférieure (22; 35; 50; 54) du piston et une partie inférieure (23; 36; 51; 58) du piston sont soudées l'une à l'autre ou sont reliées l'une à l'autre de manière hermétique à l'air au moyen d'une liaison encliquetable.

12. Module de suspension pneumatique selon les revendications 10 ou 11, **caractérisé en ce que** la protection anti-basculement est formée d'une seule pièce sur le tube intérieur (37; 48).
